# EUROPÄISCHE PATENTSCHRIFT

(11) **EP 1 151 561 B1**
(45) Veröffentlichungstag und Bekanntmachung des Hinweises auf die Patenterteilung: **28.04.2004**
(21) Anmeldenummer: 99963548.5
(22) Anmeldetag: 15.12.1999
(51) Int. Cl.: H04H 1/00, H04N 7/16

(54) **VERFAHREN UND VORRICHTUNG ZUM ERZEUGEN EINES DATENSTROMS UND VERFAHREN UND VORRICHTUNG ZUM ABSPIELEN EINES DATENSTROMS**
METHOD AND DEVICE FOR GENERATING A DATA STREAM AND METHOD AND DEVICE FOR PLAYING BACK A DATA STREAM
PROCEDE ET DISPOSITIF POUR LA GENERATION D'UN FLUX DE DONNEES ET PROCEDE ET DISPOSITIF POUR LA LECTURE D'UN FLUX DE DONNEES

(30) Priorität: 16.02.1999 DE 19906432
(43) Veröffentlichungstag der Anmeldung: 07.11.2001
(73) Patentinhaber: Fraunhofer-Gesellschaft zur Förderung der angewandten Forschung e.V., 80686 München (DE)
(72) Erfinder: RUMP, Niels, D-91056 Erlangen (DE); KOLLER, Jürgen, D-91054 Erlangen (DE); BRANDENBURG, Karlheinz, D-91054 Erlangen (DE)
(74) Vertreter: Schoppe, Fritz, Dipl.-Ing.
(86) Internationale Anmeldenummer: PCT/EP1999/009980
(87) Internationale Veröffentlichungsnummer: WO 2000/049754

(56) Entgegenhaltungen:
- EP-A- 0 717 564
- EP-A- 0 755 056
- EP-A- 0 833 241
- EP-A- 0 860 823
- EP-A- 0 874 503
- US-A- 5 303 303
- US-A- 5 559 814
- US-A- 5 689 566

## Beschreibung

Die vorliegende Erfindung bezieht sich auf die Ver- bzw. Entschlüsselung von Nutzdaten, wie z. B. Audio- und/oder Videodaten, und insbesondere auf Audio- und/oder Videodaten, die in Form eines Datenstroms vorliegen, der einen Anfangsblock und einen Nutzdatenblock aufweist.

Mit dem Auftreten von Telekommunikationsnetzen und insbesondere aufgrund der großen Verbreitung von Multimediadaten-fähigen Personalcomputern und in letzter Zeit auch von sogenannten Solid-State-Playern, entstand ein Bedarf, digitale Multimediadaten, wie z. B. digitale Audiodaten und/oder digitale Videodaten, kommerziell zu vertreiben. Die Telekommunikationsnetze können beispielsweise analoge Telephonleitungen, digitale Telephonleitungen, wie z. B. ISDN, oder auch das Internet sein. Unter kommerziellen Anbietern von Multimediaprodukten besteht der Bedarf, Multimediadaten zu verkaufen oder auszuleihen, wobei es einem Kunden möglich sein sollte, aus einem bestimmten Katalog zu jeder Zeit individuell ein bestimmtes Produkt auswählen zu können, das dann selbstverständlich nur von dem Kunden, der dafür bezahlt hat, benutzt werden darf.

Im Gegensatz zu bekannten verschlüsselten Fernsehprogrammen, wie z. B. von dem Fernsehkanal Premiere, bei dem die ausgesendeten Daten für alle Benutzer, die gegen eine bestimmte Gebühr eine geeignete Entschlüsselungsvorrichtung erworben haben, gleich verschlüsselt sind, soll die vorliegende Erfindung Verfahren und Vorrichtungen schaffen, die eine individuelle, kundenselektive und sichere Verschlüsselung und Entschlüsselung von Multimediadaten ermöglichen. Im Gegensatz zu den genannten Fernsehkanälen, die ein festes Programm vorgeben, für das sich der Benutzer komplett entscheiden muß, ermöglichen die Verfahren und Vorrichtungen der vorliegenden Erfindung eine maximale Wahlfreiheit des Kunden, d. h. derselbe muß nur für die Produkte bezahlen, die er tatsächlich auch benutzen will.

Die DE 196 25 635 C1 beschreibt Verfahren und Vorrichtungen zum Ver- bzw. Entschlüsseln von Multimediadaten, wobei die Multimediadaten in Form einer verschlüsselten Multimediadatei vorliegen, die einen Bestimmungsdatenblock und einen Nutzdatenblock aufweist. Teile des Bestimmungsdatenblocks sowie zumindest Teile des Nutzdatenblocks werden mit unterschiedlichen Schlüsseln verschlüsselt, wobei insbesondere symmetrische Verschlüsselungsverfahren eingesetzt werden.

In dem in der DE 196 25 635 C1 beschriebenen Verfahren zum Ver- bzw. Entschlüsseln von Multimediadaten wird ferner ein Benutzerindex in einem Bestimmungsdatenblock eines Bitstroms mit verschlüsselten Multimediadaten eingetragen, der den Benutzer identifiziert, der einen verschlüsselten Multimediadatenstrom verwenden darf. Wird durch diesen Benutzerindex lediglich eine Person identifiziert, so ist dieses Verfahren gegen eine unerlaubte Vervielfältigung nur dann sicher, wenn sich die Person, die einen verschlüsselten Multimediadatenstrom erworben hat, korrekt und legal verhält. Dies kann jedoch nicht immer sichergestellt werden. Führt die Person, die einen verschlüsselten Multimediadatenstrom legal erworben hat, eine Vervielfältigung durch, so wird der Kopie nicht mehr anzusehen sein, wer sie kopiert hat. Die Herkunft der Kopie kann daher nicht mehr nachverfolgt werden, was dazu führt, daß, unkorrektes Verhalten vorausgesetzt, Verletzungen von Urheberrechten Tür und Tor geöffnet werden.

Identifiziert der Benutzerindex dagegen nicht nur den Benutzer als Person sondern ein spezielles Abspielgerät eines Benutzers, wie z. B. den PC des Benutzers, so ist zwar eine Sicherheit dahingehend erreicht, daß der Benutzer, unabhängig davon, ob er sich legal oder illegal verhält, den verschlüsselten Multimediadatenstrom lediglich auf der durch den Benutzerindex identifizierten Abspielvorrichtung abspielen kann.

Problematisch an diesem Lösungsansatz ist jedoch die Tatsache, daß er nicht flexibel ist, d. h., daß dem Benutzer aufgrund des Urheberrechtsschutzes gewissermaßen diktiert wird, wo er den gekauften Multimediadatenstrom abspielen muß. Es gehört nicht besonders viel Phantasie dazu, vorauszusehen, daß ein solches System nur eine geringe Akeptanz am Markt finden wird, insbesondere, wenn daran gedacht wird, daß sich eine Vielzahl von Abspielgeräten in einem üblichen Haushalt befindet. Solche können beispielsweise einen Personalcomputer, einen Laptop, eine Hifi-Stereoanlage, eine Stereoanlage im Auto, einen Videorekorder, einen Solid-State-Player, etc. umfassen.

Die EP 0 833 241 A2 offenbart ein sicheres System zum Verwalten von Daten. Ein Autor liefert sein Copyright-Label zu einem zentralen Datenverwaltungszentrum und erhält von dort einen eigenen geheimen Schlüssel. Das Datenverwaltungszentrum verschlüsselt den geheimen Schlüssel für den Autor mit dem öffentlichen Schlüssel des Autors und liefert den verschlüsselten geheimen Schlüssel des Autors zusammen mit dem ursprünglichen Copyright-Label zu dem Autor. Der Autor entschlüsselt dann seinen geheimen Schlüssel und verschlüsselt dann seine Nutzdaten und übermittelt dieselben zusammen mit dem ursprünglichen Copyright-Label und einem Copyright-Label-Fingerabdruck zu einem ersten Benutzer. Der erste Benutzer liefert den ursprünglichen Copyright-Label, den Copyright-Label-Fingerabdruck und einen ersten Benutzer-Label zum Datenverwaltungszentrum. Das Datenverwaltungszentrum registiert den ersten Benutzer und gibt ihm die entsprechenden Schlüssel, damit er den vom Autor erhaltenen Datenstrom entschlüsseln kann. Der erste Benutzer kann den Datenstrom weiterverteilen, indem er denselben wiederum verschlüsselt, mit dem ursprünglichen Copyright-Label, dem ursprünglichen Copyright-Label-Fingerabdruck und dem ersten Benutzer-Label zu einem zweiten Benutzer überträgt. Der zweite Benutzer wendet sich dann wiederum, wenn er den Datenstrom lesen möchte, an das Datenverwaltungszentrum.

Die Aufgabe der vorliegenden Erfindung besteht daher darin, ein flexibles Konzept zum selektiven Bereitstellen von Multimediadaten zu schaffen, das einerseits am Markt Akzeptanz findet, und das andererseits Urheberrechtsgesichtspunkte berücksichtigt.

Diese Aufgabe wird durch ein Verfahren zum Erzeugen eines zweiten Datenstroms aus einem ersten Datenstrom nach Patentanspruch 1, durch ein Verfahren zum Abspielen eines zweiten Datenstroms, der aufgrund eines ersten Datenstroms erzeugt wurde, nach Patentanspruch 12, durch eine Vorrichtung zum Erzeugen eines zweiten Datenstroms aus einem ersten Datenstrom nach Patentanspruch 16 und durch eine Vorrichtung zum Abspielen eines zweiten Datenstroms, der aufgrund eines ersten Datenstroms erzeugt wurde, nach Patentanspruch 18 gelöst.

Der vorliegenden Erfindung liegt die Erkenntnis zugrunde, daß Musikpiraterie nur dadurch eingeschränkt werden kann, wenn eine gerätespezifische Identifikation von Nutzdatenströmen eingesetzt wird. Dies bedeutet, daß ein Nutzdatenstück, das in Form eines Nutzdatenstroms aufbereitet ist, nicht personenspezifisch lizenziert wird, sondern gerätespezifisch. Damit ein solches System jedoch am Markt Akzeptanz findet, muß der Situation Rechnung getragen werden, daß eine Person üblicherweise mehrere Abspielgeräte hat, und daß eine Person die freie Wahl haben möchte, auf welchem Abspielgerät sie/er das gekaufte Multimediastück abspielen möchte.

An dieser Stelle sei darauf hingewiesen, daß Nutzdaten allgemein Multimediadaten, d. h. Audiodaten, Viedeodaten oder eine Kombination aus Audiodaten und Videodaten, aber auch z. B. Textdaten umfassen. Im nachfolgenden wird der Gegenstand der vorliegenden Erfindung aus Zweckmäßigkeitsgründen jedoch anhand von Multimediadaten dargelegt. Es ist jedoch offensichtlich, daß sämtliche Nutzdaten, für die es ein Interesse gibt, ihre Herkunft nachzuverfolgen, durch die erfindungsgemäßen Vorrichtungen und Verfahren verarbeitet werden können.

Damit jedoch einer uneingeschränkten Vervielfältigung nicht wieder Tür und Tor geöffnet wird, muß eine "Kopie" des Multimediadatenstroms für ein anderes Gerät eines Benutzers ebenfalls gerätespezifisch ausgeführt sein. Gleichzeitig ist es absolut wesentlich, daß die Herkunft jeglicher Kopie eines Multimediastücks nachverfolgt werden kann, d. h. es sollte immer zweifelsfrei festgestellt werden können, von wem ein Multimediastück geschaffen worden ist (Autor, Komponist), von wem es in Umlauf gebracht worden ist (Provider, Distributor, Lieferant), wer eine Zwischenkopie erstellt hat, und wer eventuell eine weitere Zwischenkopie erstellt hat usw. Nur wenn die Herkunft klar ist, kann ein Benutzer eines Multimediastücks zweifelsfrei beweisen, daß er das Multimediastück legal nutzt, bzw. nur dann kann ein illegaler Nutzer zweifelsfrei überführt werden.

Zudem ist es möglich, die Bindung der Multimediadaten nicht an ein (Abspiel-)Gerät direkt vorzunehmen, sondern die Daten an eine "Smart Card" zu binden. Dadurch können identische Multimediadatenströme auf verschiedenen Geräten vorgehalten werden, aber nur auf dem jeweiligen Gerät, in das die Smart Card zu dem Zeitpunkt eingefügt ist, genutzt werden.

Gemäß der vorliegenden Erfindung wird daher aus einem ersten Datenstrom, der einen ersten Anfangsblock und einen ersten Nutzdatenblock mit Multimediadaten aufweist, ein zweiter Datenstrom erzeugt, der ebenfalls wieder einen Anfangsblock und einen Nutzdatenblock aufweist. In diesem zweiten Anfangsblock, d. h. dem Anfangsblock des zweiten Datenstroms, werden jedoch gemäß der vorliegenden Erfindung zumindest die Teile des ersten Anfangsblocks, d. h. des Anfangsblocks des ersten Datenstroms, aufgenommen, die Rückschlüsse auf die Herkunft der Multimediadaten gestatten. Der zweite Nutzdatenblock umfaßt dieselben Multimediadaten wie der erste Nutzdatenblock, d. h. der Nutzdatenblock des ersten Datenstroms.

Der Anfangsblock des zweiten Datenstroms kann im wesentlichen das gleiche Format wie der Anfangsblock des ersten Datenstroms haben. Er enthält jedoch neben den üblichen Anfangsblockinformationen zusätzlich zumindest die Informationen aus dem ersten Anfangsblock, die Rückschlüsse auf die Herkunft der Multimediadaten gestatten.

Bei einem bevorzugten Ausführungsbeispiel der vorliegenden Erfindung wird im wesentlichen der gesamte erste Anfangsblock in den zweiten Anfangsblock eingetragen. Um den zweiten Anfangsblock, der den ersten Anfangsblock aufweist, gegen Manipulationen zu sichern, kann derselbe zusätzlich mit einer digitalen Unterschrift versehen werden, die aus den Daten des zweiten (aktuellen) Anfangsblock und darüberhinaus aus den Daten des ersten (alten) Anfangsblock abgeleitet ist. Daten des ersten Anfangsblocks, die Rückschlüsse auf die Herkunft der Multimediadaten gestatten, umfassen bei einem bevorzugten Ausführungsbeispiel der vorliegenden Erfindung eine Lieferantenkennung, d. h. eine Identifikation des Lieferanten des ersten Datenstroms, der beispielsweise die Deutsche Telekom sein könnte, sowie Urheberinformationen, die Rückschlüsse auf den Autor bzw. Komponisten des Multimediastücks erlauben, sowie eine Benutzerkennung, d. h. eine Identifikation des Geräts, für das der Datenstrom ursprünglich lizenziert worden ist.

Ein Vorteil des erfindungsgemäßen Konzepts besteht insbesondere darin, daß es beliebig oft durchgeführt werden kann, was dann zu einer mehrfach-rekursiven Anfangsblockstruktur führt, da ein dritter Datenstrom, der einen dritten Anfangsblock und einen dritten Nutzdatenblock aufweist, in seinem Anfangsblock wieder Herkunftsinformationen des zweiten Anfangsblocks umfaßt. Diese Herkunftsinformationen sind zum einen die Herkunftsinformationen des ersten Anfangsblocks und zum anderen Herkunftsinformationen des zweiten Anfangsblocks. In Analogie zu den Herkunftsinformationen des ersten Anfangsblocks sind Herkunftsinformationen des zweiten Anfangsblocks beispielsweise eine Identifikation des Geräts, für das das Stück ursprünglich vom ursprünglichen Lieferanten lizenziert wurde, und eine Kennung des Geräts, für das die "Kopie" erstellt wurde, z. B. eine Kennung eines Auto-Hifi-Geräts.

An dieser Stelle wird besonders darauf hingewiesen, daß die Urheberinformationen des ersten Anfangsblocks auch in dem Anfangsblock des dritten Datenstroms vorhanden sind. Damit ist das erfindungsgemäße Konzept zu gesetzlichen Vorschriften konform, die jegliches Programm bzw. jegliche Vorrichtung als illegal bezeichnen, das Urheberinformationen entfernt. Solche gesetzlichen Vorschriften sind bereits in den Vereinigten Staaten nationales Recht geworden und es dürfte sich lediglich um eine Frage der zeit handeln, bis diese Vorschriften auch europaweit nationalisiert sind.

Bei einem bevorzugten Ausführungsbeispiel der vorliegenden Erfindung enthält der Teil eines alten Anfangsblocks, der in den neuen Anfangsblock übernommen wird, auch Lizenzinformationen, die sich auf die Art und Weise beziehen, auf die ein lizenziertes Multimediastück verwendet werden darf, d. h. wie oft es abgespielt werden darf und wie oft es kopiert werden darf, oder ob eine Kopie einer Kopie zulässig ist oder nicht.

Selbstverständlich kann der Nutzdatenblock symmetrisch verschlüsselt sein, während der Schlüssel des symmetrischen Verschlüsselungsverfahrens wiederum asymmetrisch verschlüsselt ist. In diesem Fall wird eine Vorrichtung zum Erzeugen des zweiten Datenstroms aus dem ersten Datenstrom eine vollständige Entschlüsselung und daran anschließend eine vollständige erneute Verschlüsselung durchführen.

Das erfindungsgemäße Konzept erlaubt somit eine umfassende Sicherung eines Multimediastücks gewissermaßen vom Autor oder Komponisten aus über eine beliebige Anzahl von Kopien hinweg bis zu einem Endbenutzer. Darüberhinaus kann zu jedem Zeitpunkt einer Kopier- bzw. Verteilungskette die Herkunft der aktuellen Kopie lückenlos nachvollzogen werden, wobei die Anzahl der Kopier- bzw. Verteilungsvorgänge beliebig ist. Außerdem werden zu jedem Zeitpunkt Urheberinformationen berücksichtigt, wodurch dem Urheberrechtsschutz Genüge getan wird. Schließlich kann das erfindungsgemäße Konzept effizient und flexibel implementiert werden, derart, daß es auch für preisgünstige Abspielgeräte mit begrenzten Speicher- und Prozessorressourcen geeignet ist, daß es einfach zu bedienen ist, und daß moderne Kundenwünsche nach hoher Flexibilität voll und ganz berücksichtigt werden.
- Fig. 1: einen Multimediadaten-Strom, der gemäß der vorliegenden Erfindung erzeugt werden kann;
- Fig. 2: eine detailliertere Darstellung des Anfangsblocks und des Nutzdatenblocks des verschlüsselten Multimediadatenstroms;
- Fig. 3: eine Auswahl bestimmter Einträge in die einzelnen Unterblöcke des Anfangsblocks;
- Fig. 4: eine schematische Darstellung eines Verteilungsszenarios;
- Fig. 5: eine schematische Ansicht eines Datenstroms mit rekursiver Anfangsblockstruktur;
- Fig. 6: ein Flußdiagramm eines Verfahrens zum Erzeugen eines zweiten Datenstroms aus einem ersten Datenstrom gemäß der vorliegenden Erfindung; und
- Fig. 7: ein Verfahren zum Abspielen eines zweiten Datenstroms, der aufgrund eines ersten Datenstroms erzeugt worden ist, gemäß der vorliegenden Erfindung.

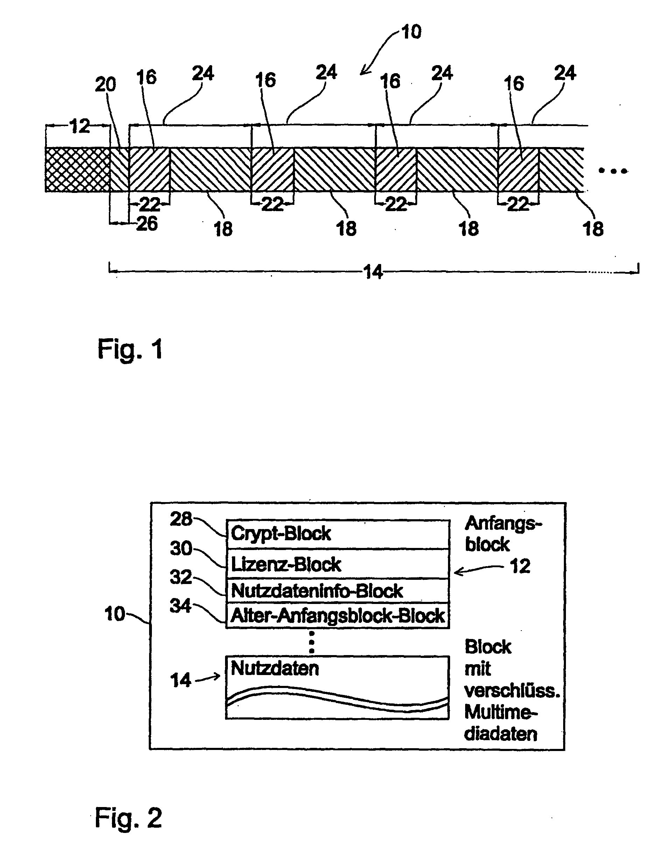

Fig. 1 zeigt einen verschlüsselten Multimediadatenstrom 10, der einen Anfangsblock oder Header 12 und einen Nutzdatenblock 14, d. h. einen Block mit verschlüsselten Multimediadaten, aufweist. Der Nutzdatenblock 14 umfaßt verschlüsselte Abschnitte 16 und unverschlüsselte Abschnitte 18 zwischen den verschlüsselten Abschnitten 16. Außerdem umfaßt ein Multimediadatenstrom, der gemäß der vorliegenden Erfindung erzeugt werden kann, einen weiteren unverschlüsselten Abschnitt 20, der auf den Anfangsblock 12 folgt und vor einem verschlüsselten Abschnitt 16 angeordnet ist.

Üblicherweise sind die zu verschlüsselten Multimediadaten auf irgendeine Art und Weise codiert, wie z. B. nach einem MPEG-Standard, wie z. B. MPEG-2 AAC, MPEG-4 AAC oder MPEG Layer-3. Daher ist es ausreichend, gewisse Abschnitte der zu verschlüsselten Multimediadaten zu verschlüsseln. Dies führt zu einem wesentlich verringerten Verarbeitungsaufwand sowohl beim Provider, der die Daten verschlüsselt, als auch beim Kunden, der die Daten wieder entschlüsseln muß. Außerdem wird durch die lediglich teilweise Verschlüsselung der Multimediadaten der Hörgenuß bzw. der Sehgenuß eines Benutzers, der lediglich die unverschlüsselten Multimediadaten verwendet, durch die ständig auftretenden verschlüsselten Blöcke stark beeinträchtigt.

Obwohl Fig. 1 einen verschlüsselten Multimediadatenstrom zeigt, bei dem der Anfangsblock 12 am Anfang des verschlüsselten Multimediadatenstroms angeordnet ist, soll sich diese Anordnung von Anfangsblock und Nutzdatenblock nicht auf die Übertragung des verschlüsselten Multimediadatenstroms beziehen. Der Ausdruck "Anfangsblock" soll lediglich zum Ausdruck bringen, daß eine Entschlüsselungsvorrichtung, die den verschlüsselten Multimediadatenstrom entschlüsseln möchte, zunächst zumindest Teile des Anfangsblocks benötigt, bevor die Multimediadaten selbst entschlüsselt werden können. Je nach Übertragungsmedium könnte der Anfangsblock irgendwo auch innerhalb des Nutzdatenblocks angeordnet sein bzw. durchaus nach bestimmten Teilen des Nutzdatenblocks empfangen werden, wenn beispielsweise an eine Paket-orientierte Übertragung des Multimediadatenstroms gedacht wird, bei der unterschiedliche Pakete, von denen eines den Anfangsblock enthalten kann und ein anderes einen Teil des Nutzdatenblocks enthalten kann, über unterschiedliche physische Übertragungswege übertragen werden, derart, daß die Empfangsreihenfolge ganz und gar nicht der Sendereihenfolge entsprechen muß. Eine Entschlüsselungsvorrichtung muß in diesem Fall jedoch in der Lage sein, die empfangenen Pakete zu speichern und wieder zu ordnen, derart, daß Informationen aus dem Anfangsblock extrahiert werden, um mit dem Entschlüsseln zu beginnen. Der verschlüsselte Multimediadatenstrom könnte ferner in Form einer Datei vorliegen oder aber auch in Form eines tatsächlichen Datenstroms, wenn beispielsweise an eine Live-Übertragung eines Multimediaereignisses gedacht wird. Diese Anwendung wird insbesondere beim digitalen Benutzer-selektiven Rundfunk auftreten.

Die Länge eines verschlüsselten Abschnitts 16 wird durch einen Wert Menge 22 dargestellt, während der Abstand im verschlüsselten Multimediadatenstrom von dem Beginn eines verschlüsselten Abschnitts 16 bis zum Beginn des nächsten verschlüsselten Abschnitts 16 mit Schritt 24 bezeichnet wird. Die Länge des weiteren verschlüsselten Abschnitts 20 wird durch einen Wert Erster Schritt 26 angegeben.

Diese Werte 22, 24 und 26 werden selbstverständlich für ein korrektes Entschlüsseln der Multimediadaten in einer Entschlüsselungsvorrichtung benötigt, weshalb dieselben in den Anfangsblock 12 eingetragen werden müssen, wie es später erläutert wird.

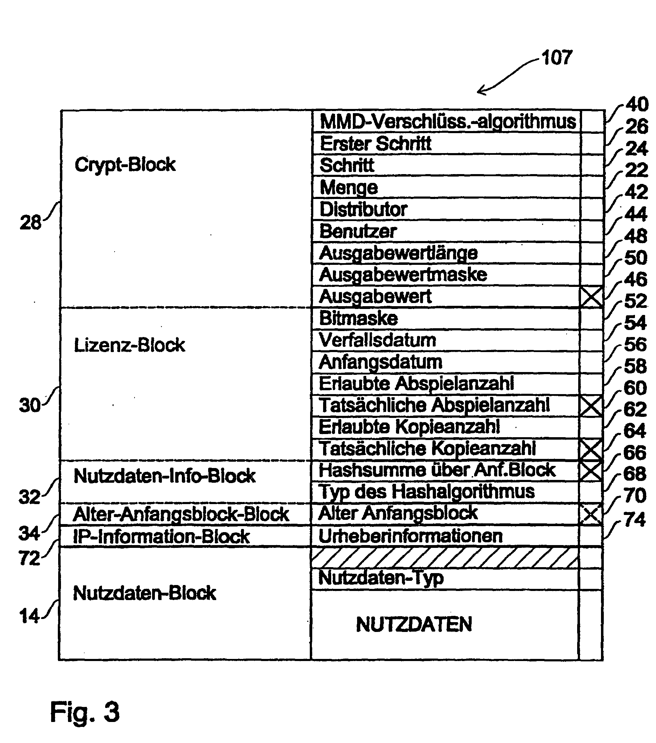

Fig. 2 zeigt eine detailliertere Darstellung des verschlüsselten Multimediadatenstroms 10, der aus dem Anfangsblock 12 und dem Nutzdatenblock 14 besteht. Der Anfangsblock 12 ist in mehrere Unterblöcke unterteilt, die im einzelnen insbesondere bezugnehmend auf Fig. 3 erläutert werden. Es sei darauf hingewiesen, daß die Anzahl und Funktion der Unterblöcke beliebig erweitert werden kann. In Fig. 2 sind daher lediglich beispielhaft einzelne Unterblöcke des Anfangsblocks 12 aufgeführt. Derselbe umfaßt, wie es in Fig. 2 gezeigt ist, einen sogenannten Crypt-Block 29, der allgemein gesagt für das Verschlüsseln der Multimediadaten relevante Informationen aufweist. Weiterhin umfaßt der Anfangsblock 12 einen sogenannten Lizenz-Block 30, der Daten aufweist, die sich auf die Art und Weise beziehen, wie ein Benutzer den verschlüsselten Multimediadatenstrom verwenden kann bzw. darf. Der Anfangsblock 12 umfaßt ferner einen Nutzdateninfo-Block 32, der Informationen bezüglich des Nutzdatenblocks 14 sowie generelle Informationen über den Anfangsblock 12 selbst umfassen kann. Weiterhin kann der Anfangsblock 12 einen Alter-Anfangsblock-Block 34 aufweisen, der eine sogenannte rekursive Anfangsblock-Struktur ermöglicht. Dieser Block versetzt den Benutzer, der neben einer Entschlüsselungsvorrichtung auch eine Verschlüsselungsvorrichtung hat, in die Lage, einen verschlüsselten Multimediadatenstrom für andere in seinem Besitz befindliche Abspielgeräte umzuformatieren, ohne die ursprünglichen vom Distributor gelieferten Anfangsblockinformationen zu verlieren bzw. zu modifizieren. Je nach Anwendungsbereich können noch weitere Unterblöcke, wie z. B. ein IP-Information-Block (IP = Intellectual Property = Geistiges Eigentum) nach ISO/IEC 14496-1, MPEG-4, Systems, 1998, der Urheberrechtsinformationen umfaßt, zu dem Anfangsblock 12 hinzugefügt werden.

Wie es in der Technik üblich ist, kann jedem Block eine interne Blockstruktur zugewiesen werden, die zunächst einen Blockidentifikator fordert, die dann die Länge des Unterblocks umfaßt, und die dann schließlich die Block-Nutzdaten selbst aufführt. Damit erhält der verschlüsselte Multimediadatenstrom und insbesondere der Anfangsblock des verschlüsselten Multimediadatenstroms einer erhöhte Flexibilität, derart, daß auf neue Anforderungen insoweit reagiert werden kann, daß zusätzliche Unterblöcke hinzugefügt werden bzw. bestehende Unterblöcke weggelassen werden können.

Fig. 3 gibt eine Übersicht über die Block-Nutzdaten der einzelnen in Fig. 2 dargestellten Unterblöcke.

Zunächst wird auf den Crypt-Block 28 eingegangen. Derselbe enthält einen Eintrag für einen Multimediadaten-Verschlüsselungsalgorithmus 40, der den bei einem bevorzugten Ausführungsbeispiel verwendeten symmetrischen Verschlüsselungsalgorithmus identifiziert, der beim Verschlüsseln der Multimediadaten verwendet worden ist. Der Eintrag 40 dürfte ein Index für eine Tabelle sein, derart, daß eine Entschlüsselungsvorrichtung nach Lesen des Eintrags 40 in der Lage ist, denselben Verschlüsselungsalgorithmus aus einer Vielzahl von Verschlüsselungsalgorithmen auszuwählen, den die Verschlüsselungsvorrichtung verwendet hat. Der Crypt-Block 28 umfaßt ferner den Eintrag Erster Schritt 26, den Eintrag Schritt 24 und den Eintrag Menge 22, die bereits in Verbindung mit Fig. 1 dargestellt worden sind. Diese Einträge in dem Anfangsblock versetzen eine Entschlüsselungsvorrichtung in die Lage, einen verschlüsselten Multimediadatenstrom entsprechend unterzugliedern, um eine korrekte Entschlüsselung durchführen zu können.

Der Crypt-Block 28 enthält ferner einen Eintrag für den Distributor bzw. Provider bzw. Lieferanten 42, der ein Code für den Distributor ist, der den verschlüsselten Multimediadatenstrom erzeugt hat. Ein Eintrag Benutzer 44 identifiziert den Benutzer, der von dem Distributor, der durch den Eintrag 42 identifiziert ist, den verschlüsselten Multimediadatenstrom auf irgendeine Art und Weise erworben hat. Erfindungsgemäß wird es bevorzugt, keine Personen-bezogene Benutzerkennung zu verwenden, da dies illegalen Vervielfältigungen Tür und Tor öffnen würde. Stattdessen wird es bevorzugt, die Benutzerkennung gerätespezifisch durchzuführen. Der Eintrag Benutzer würde dann z. B. die Seriennummer eines PC, eines Laptops, eines Auto-HiFi-Geräts, einer Heim-Stereoanlage, einer Smart Card, etc. umfassen, die ein Abspielen nur auf dem speziellen Gerät zuläßt. Zur weiteren Erhöhung der Flexibilität und/oder Sicherheit könnte statt der Seriennummer, die bei jedem Hersteller unterschiedlich aussieht, die aber zufällig identisch sein könnten, eine spezielle Kennung, wie z. B. eine logische Verknüpfung der Festplattengröße mit der Prozessornummer etc. beim Beispiel eines PC, eingesetzt werden.

Ein Eintrag 46 enthält einen Ausgabewert, auf den später detailliert eingegangen wird. Dieser Ausgabewert stellt allgemein gesagt eine verschlüsselte Version des Multimediadaten-Schlüssels dar, der in Verbindung mit dem durch den Eintrag 40 identifizierten Multimediadaten-Verschlüsselungsalgorithmus benötigt wird, um die in dem Nutzdatenblock 14 vorhandenen verschlüsselten Multimediadaten (Abschnitte 16 von Fig. 1) korrekt zu entschlüsseln. Um eine ausreichende Flexibilität für zukünftige Anwendungen zu haben, sind ferner die beiden Einträge Ausgabewertlänge 48 und Ausgabewertmaske 50 vorgesehen. Der Eintrag Ausgabewertlänge 48 gibt an, welche Länge der Ausgabewert 46 tatsächlich hat. Um ein flexibles Anfangsblockformat zu erhalten, sind jedoch in dem Anfangsblockformat für den Ausgabewert mehr Byte vorgesehen als ein Ausgabewert derzeit tatsächlich hat. Die Ausgabewertmaske 50 gibt daher an, wie ein kürzerer Ausgabewert auf einen längeren Ausgabewertplatz gewissermaßen verteilt wird. Ist die Ausgabewertlänge beispielsweise halb so groß wie der verfügbare Platz für den Ausgabewert, so könnte die Ausgabewertmaske derart gestaltet sein, daß die erste Hälfte der Ausgabewertmaske gesetzt ist, während die zweite Hälfte abgedeckt ist. Dann würde der Ausgabewert einfach in den von der Syntax für den Anfangsblock vorgesehenen Raum eingetragen werden und die erste Hälfte einnehmen, während die andere Hälfte aufgrund der Ausgabewertmaske 50 ignoriert wird.

Im nachfolgenden wird auf den Lizenz-Block 30 des Anfangsblocks 12 eingegangen. Derselbe umfaßt einen Eintrag Bitmaske 52. Dieser Eintrag kann bestimmte spezielle Informationen für das Abspielen bzw. für die generelle Art der Verwendung der verschlüsselten Multimediadaten haben. Insbesondere könnte hiermit einer Entschlüsselungsvorrichtung mitgeteilt werden, ob bzw. ob nicht die Nutzdaten lokal abgespielt werden können. Weiterhin könnte hier signalisiert werden, ob das Herausforderungs-Antwort-Verfahren zum Verschlüsseln eingesetzt worden ist, das in dem eingangs erwähnten Deutschen Patent DE 196 25 635 Cl beschrieben ist und einen effizienten Datenbankzugriff ermöglicht.

Ein Eintrag Verfallsdatum 54 gibt den Zeitpunkt an, zu dem die Erlaubnis, den verschlüsselten Multimediadatenstrom zu entschlüsseln, erlischt. Eine Entschlüsselungsvorrichtung wird in diesem Fall den Eintrag Verfallsdatum 54 prüfen und mit einer eingebauten Zeitmeßeinrichtung vergleichen, um im Falle, daß das Verfallsdatum bereits überschritten ist, keine Entschlüsselung des verschlüsselten Multimediadatenstroms mehr durchzuführen. Dies erlaubt es einem Provider, auch zeitlich begrenzt verschlüsselte Multimediadaten zur Verfügung zu stellen, was den Vorteil einer wesentlich flexibleren Handhabung und auch Preisgestaltung ermöglicht. Diese Flexibilität wird weiter durch einen Eintrag Anfangsdatum 56 unterstützt, in dem spezifiziert ist, ab wann eine verschlüsselte Multimediadatei entschlüsselt werden darf. Eine Verschlüsselungsvorrichtung wird den Eintrag Anfangsdatum mit ihrer eingebauten Uhr vergleichen, um erst dann eine Entschlüsselung der verschlüsselten Multimediadaten durchzuführen, wenn der aktuelle Zeitpunkt später als das Anfangsdatum 56 ist.

Ein Eintrag Erlaubte Abspielanzahl 58 gibt an, wie oft der verschlüsselte Multimediadatenstrom entschlüsselt, d. h. abgespielt werden darf. Dies erhöht weiter die Flexibilität des Providers, derart, daß er nur eine bestimmte Anzahl des Abspielens beispielsweise gegen eine bestimmte Summe zuläßt, die kleiner ist als eine Summe, die für die unbeschränkte Nutzung des verschlüsselten Multimediadatenstroms anfallen würde.

Zur Verifizierung bzw. Unterstützung des Eintrags Erlaubte Abspielanzahl 58 umfaßt der Lizenz-Block 30 ferner einen Eintrag Tatsächliche Abspielanzahl 60, der nach jedem Entschlüsseln des verschlüsselten Multimediadatenstroms beispielsweise um Eins inkrementiert werden könnte. Eine Entschlüsselungsvorrichtung wird daher immer überprüfen, ob der Eintrag Tatsächliche Abspielanzahl kleiner als der Eintrag Erlaubte Abspielanzahl ist. Wenn dies der Fall ist, wird eine Entschlüsselung der Multimediadaten durchgeführt. Wenn dies nicht der Fall ist, wird keine Entschlüsselung mehr ausgeführt.

Analog zu den Einträgen 58 und 60 sind die Einträge Erlaubte Kopieanzahl 62 und Tatsächliche Kopieanzahl 64 implementiert. Durch die beiden Einträge 62 und 64 wird sichergestellt, daß ein Benutzer der Multimediadaten dieselben lediglich so oft kopiert, wie es ihm vom Provider erlaubt wird, bzw. so oft, wie er beim Kauf der Multimediadaten bezahlt hat. Durch die Einträge 58 bis 64 wird ein effektiver Urheberrechtsschutz sichergestellt, und kann eine Selektion zwischen privaten Nutzern und gewerblichen Nutzern erreicht werden, beispielsweise, indem die Einträge Erlaubte Abspielanzahl 58 und Erlaubte Kopieanzahl 62 auf einen kleinen Wert eingestellt werden.

Die Lizenzierung könnte z. B. so gestaltet sein, daß eine bestimmte Anzahl von Kopien (Eintrag 62) des Originals erlaubt ist, während keine Kopien einer Kopie zulässig sind. Der Anfangsblock einer Kopie würde dann im Gegensatz zum Anfangsblock des Originals als Eintrag Erlaubte Kopieanzahl eine Null haben, derart, daß diese Kopie von einer ordnungsgemäßen Ver/Entschlüsselungsvorrichtung nicht mehr kopiert wird.

Bei dem hier gezeigten Beispiel für ein Multimediadatenschutzprotokoll (MMP; MMP = Multimedia Protection Protcol) enthält der Anfangsblock 12 ferner einen Nutzdaten-Informationsblock 32, der hier lediglich zwei Block-Nutzdateneinträge 66 und 68 hat, wobei der Eintrag 66 eine Hash-Summe über den gesamten Anfangsblock enthält, während der Eintrag 68 den Typ des Hash-Algorithmus identifiziert, der zum Bilden der Hash-Summe über den gesamten Anfangsblock verwendet worden ist. Hash-Algorithmen sind in der Technik bekannt und können dazu verwendet werden, eine digitale Unterschrift einer Datenmenge zu bilden, derart, daß auch eine kleinere Änderung der Daten in der Datenmenge zu einer Änderung der digitalen Unterschrift führt, wodurch auf einfache und effiziente Art und Weise die Autenthizität der Daten und insbesondere des (nicht-verschlüsselten) Anfangsblocks überprüft werden kann.

Ein bevorzugtes Verfahren zur Erzeugung einer digitalen Unterschrift besteht darin, eine Hash-Summe über den gesamten Anfangsblock zu bilden und diese dann asymmetrisch zu ver- bzw. entschlüsseln, um den Eintrag 66 zu erhalten. Im einzelnen würde der Lieferant die Hash-Summe des gesamten Anfangsblocks mit seinem privaten Schlüssel entschlüsseln. Die Verschlüsselungsvorrichtung beim Kunden würde dagegen selbst die Hash-Summe über den gesamten (unter Umständen illegal modifizierten) Anfangsblock bilden und darüberhinaus den Eintrag 66 mit dem öffentlichen Schlüssel des asymmetrischen Verschlüsselungsverfahren entschlüsseln und die beiden Ergebnisse dann vergleichen. Wenn sie übereinstimmen, wird der Abspielvorgang gestartet werden. Stimmen sie nicht überein, ist kein Entschlüsseln/Decodieren/Abspielen möglich.

In diesem Zusammenhang sei beispielsweise auf das Fachbuch "Applied Cryptography", Second Edition, John Wiley & Sons, Inc. von Bruce Schneier (ISBN 0 471-11709-9) verwiesen, das eine ausführliche Darstellung symmetrischer Verschlüsselungsalgorithmen, asymmetrischer Verschlüsselungsalgorithmen und Hash-Algorithmen umfaßt.

Der Anfangsblock 12 umfaßt schließlich den Alter-Anfangsblock-Block 34, der neben den Synchronisationsinformationen, die in Fig. 3 nicht dargestellt sind, den Eintrag Alter Anfangsblock 70 aufweist. In den Eintrag Alter-Anfangsblock 70 kann, wenn ein Benutzer selbst eine Verschlüsselung durchführt und somit einen neuen Anfangsblock 12 erzeugt, der alte Anfangsblock vom Provider bewahrt werden, um keine wesentlichen Informationen zu verlieren, die der Provider in den Anfangsblock eingetragen hat. Dazu könnten beispielsweise Urheberinformationen (IP-Information-Block) frühere Benutzerinformationen und Distributoreninformationen zählen, die eine Zurückverfolgung einer Multimediadatei, die beispielsweise mehrmals von unterschiedlichen Geräten ent/ver-schlüsselt worden ist, auf den ursprünglichen Anbieter transparent ermöglichen, wobei Urheberinformationen bewahrt werden. Damit ist es möglich, jederzeit zu überprüfen, ob eine verschlüsselte Multimediadatei legal oder illegal erworben worden ist.

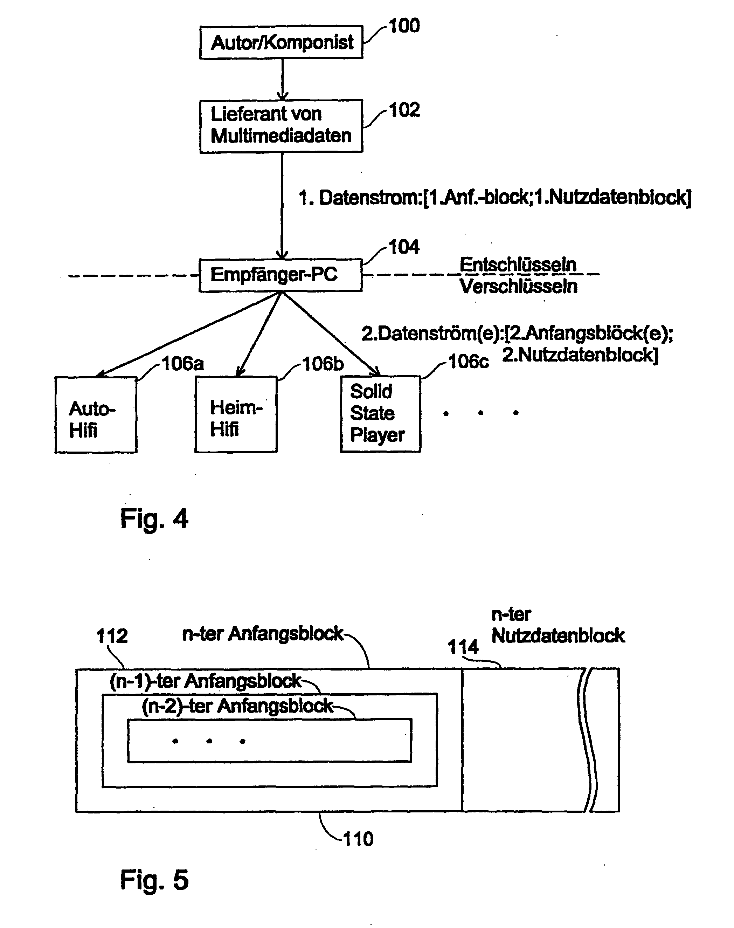

Fig. 4 zeigt ein schematisches Blockdiagramm eines Szenarios, bei dem das erfindungsgemäße Konzept auf vorteilhafte Art und Weise eingesetzt werden kann. Ein Autor oder Komponist 100 hat ein Multimediastück, z. B. einen Text, ein Musikstück, einen Film oder ein Bild geschaffen. Dieses Werk, das in dieser Anmeldung allgemein als Multimediastück bezeichnet wird, überbringt er einem Lieferanten 102 von Multimediadaten. An dieser Stelle sei besonders darauf hingewiesen, daß der Ausdruck "Multimediadaten" im Sinne der vorliegenden Erfindung Audiodaten, Videodaten oder eine Kombination von Audio- und Videodaten umfaßt.

Der Lieferant sorgt dafür, daß das Multimediastück des Autors/Komponisten 100 in Umlauf kommt, indem derselbe es beispielsweise nach dem Verfahren MPEG Layer 3 (MP3) codiert. Um eine kundenselektive Nutzungsüberlassung des codierten Multimediastücks zu erreichen, wird der Lieferant 102 das codierte Multimediastück in einen ersten Datenstrom bringen, der einen Anfangsblock und einen Nutzdatenblock aufweist. Ein Datenstrom, wie er verwendet werden könnte, ist in Fig. 3 dargestellt.

In diesem Zusammenhang sei besonders auf den IP-Information-Block 72 hingewiesen, der als Nutzdaten Urheberinformationen 74 aufweist, die den Autor/Komponisten oder allgemein Künstler identifizieren. Der IP-Informations-Block könnte beispielsweise nach ISO/IEC 14496-1 MPEG-4 Systems, 1998, ausgeführt sein. Er könnte insbesondere den Namen des Autors/Komponisten/Künstlers umfassen oder auch die ISBN-Nummer (ISBN = International Standard Book Number), den ISRC-Code (ISRC = International Standard Recording Code), die ISAN-Nummer (ISAN = International Standard Audiovisual Number), die ISMN-Nummer (ISMN = International Standard Music Number), usw. Solche Metainformationen werden eine eindeutige Identifikation des Urhebers des Multimediastücks erlauben, derart, daß durch Hinzufügen dieser Metainformationen an die Nutzdaten die Durchsetzung von Urheberrechten stark vereinfacht wird.

Der Lieferant von Multimediadaten 102 erzeugt einen ersten Datenstrom, der einen ersten Anfangsblock und einen ersten Nutzdatenblock aufweist. In dem Anfangsblock können sämtliche in Fig. 3 dargestellte Daten enthalten sein, wobei insbesondere auf die Urheberinformationen (Eintrag 74), die Distributor-Kennung (Eintrag 42) und die Benutzer-Kennung (Eintrag 44) verwiesen wird. Während die Urheberinformationen (Eintrag 74) allgemein die Herkunft des Multimediastücks darstellen, legt die Distributor-Kennung (42) eindeutig die Herkunft des ersten Datenstroms selbst fest, während die Benutzer-Kennung das "Ziel" des ersten Datenstroms festlegt, d. h. das Gerät, das den Datenstrom verwenden darf und das auch dafür bezahlt hat, wodurch einerseits die Dienstleistung des Lieferanten 102 von Multimediadaten bezahlt wird und andererseits Abgaben an den Autor/Komponisten 100 fließen können. In dem ersten Anfangsblock des ersten Datenstroms könnte beispielsweise ein Empfänger-PC 104 über die Benutzer-Kennung 44 identifiziert sein. Der erste Datenstrom kann nun einerseits auf dem Empfänger-PC 104 abgespielt werden, der Empfänger-PC ist jedoch erfindungsgemäß ferner derart ausgestaltet, daß er auch eine "Kopie" des ersten Datenstroms erzeugen kann, um einen bzw. mehrere zweite Datenströme zu erzeugen, die in ihrem Anfangsblock die Benutzer-Kennung 44 eines Auto-Hifi-Geräts 106a, eines Heim-Hifi-Geräts 106b, eines Solid-State-Players 106c etc. haben.

Jeder zweite Anfangsblock wird im wesentlichen denselben Nutzdatenblock haben, der Anfangsblock jedes zweiten Datenstroms, d. h. der zweite Anfangsblock, wird jedoch unterschiedlich sein, und zwar bezüglich der Benutzer-Kennung 44. Jeder zweite Anfangsblock wird jedoch erfindungsgemäß darüberhinaus Informationen enthalten, die Rückschlüsse auf die Herkunft des entsprechenden zweiten Datenstroms ermöglichen. Diese Informationen können Urheberinformationen, eine Kennung für den Empfänger-PC 104 und eine Kennung für den Lieferanten 102 des ersten Datenstroms umfassen. Vorzugsweise enthält der zweite Anfangsblock darüberhinaus Lizenzinformationen, die sich darauf beziehen, wie oft das Multimediastück abgespielt werden darf, oder wie oft es kopiert werden 'darf. Insbesondere könnte der Fall vorliegen, daß z. B. fünf Kopien erlaubt sind, daß jedoch keine Kopie der Kopie erlaubt ist. In dem Eintrag Erlaubte Kopieanzahl 62 des ersten Anfangsblocks würde dann beispielsweise Fünf stehen. In dem Eintrag Erlaubte Kopieanzahl des zweiten Anfangsblocks würde dagegen Null stehen. Auch wenn das Auto-Hifi-Gerät 106a, das Heim-Hifi-Gerät 106b oder der Solid-State-Player 106c derart ausgeführt wäre, daß er selbst wiederum eine Entschlüsselung bzw. Verschlüsselung durchführen könnte, d. h. wie der Empfänger-PC 104, würde dennoch keine weitere Kopie erzeugt werden, d. h. kein dritter Datenstrom, da der Eintrag 62 im zweiten Anfangsblock des zweiten Datenstroms auf Null gesetzt ist. Wäre dies jedoch nicht der Fall und würde die Kopie einer Kopie zulässig sein, so könnten die einzelnen Geräte 106a bis 106c wiederum dritte Datenströme erzeugen, die Herkunftsinformationen des entsprechenden zweiten Datenstroms und natürlich auch des entsprechenden ersten Datenstroms umfassen würden.

Damit ergibt sich eine im Prinzip beliebig wiederholbare rekursive Anfangsblock-Struktur, wie sie schematisch in Fig. 5 dargestellt ist. Fig. 5 zeigt einen n-ten Datenstrom 110, der einen n-ten Anfangsblock 112 und einen n-ten Nutzdatenblock 114 aufweist. Der n-te Anfangsblock 112 umfaßt wiederum einen (n-1)-ten Anfangsblock, der wiederum einen (n-2)-ten Anfangsblock aufweist, usw.

Es wird bevorzugt, daß der Lieferant von Multimediadaten 102 (Fig. 4) die Multimediadaten in dem ersten Nutzdatenblock zumindest teilweise verschlüsselt. Es wird bevorzugt, zum Verschlüsseln der Multimediadaten ein symmetrisches Verschlüsselungsverfahren zu verwenden, wobei der Schlüssel des symmetrischen Verschlüsselungsverfahrens wiederum asymmetrisch verschlüsselt wird. Der mit dem privaten Schlüssel des Lieferanten 102 verschlüsselte asymmetrische Schlüssel für das symmetrische Verschlüsselungsverfahren ist der Ausgabewert 46 (Fig. 3). Der Empfänger-PC 104 wird daher den entsprechenden öffentlichen Schlüssel des Lieferanten 102 von Multimediadaten benötigen, um den Ausgabewert 46 wieder zu entschlüsseln, um den Schlüssel für das symmetrische Entschlüsselungsverfahren zu erhalten, den auch der Lieferant 102 von Multimediadaten verwendet hat. Nun ist der Empfänger-PC 104 in der Lage, den ersten Datenstrom abzuspielen. Wenn derselbe codiert ist, führt der Empfänger-PC 104 vor dem Abspielen eine Decodierung durch. Eie Reihenfolge wird daher sein: Entschlüsseln, Decodieren, Abspielen.

Der Empfänger-PC soll jedoch auch in der Lage sein, einen zweiten Datenstrom für ein spezielles weiteres Abspielgerät 106a bis 106c zu erzeugen. In diesem Fall kann der Empfänger-PC 104 konfiguriert sein, um die entschlüsselt vorliegenden Multimediadaten wieder zu verschlüsseln, wobei ein symmetrisches Verschlüsselungsverfahren aufgrund von Schnelligkeitsgesichtspunkten bevorzugt wird. Der Empfänger-PC 104 wird wiederum den Schlüssel für das symmetrische Verschlüsselungsverfahren mit seinem privaten Schlüssel asymmetrisch verschlüsseln, den zweiten Anfangsblock mit seiner eigenen Kennung als Distributor-Eintrag 42 versehen und den zweiten Anfangsblock ferner mit der Kennung z. B. des Auto-Hifi-Geräts als Benutzer-Kennung 44 versehen. Ferner wird der Empfänger-PC 104, da er einen anderen Datenschlüssel hat als der Lieferant 102 von Multimediadaten einen anderen Ausgabewert erzeugen, der in den Eintrag 46 des zweiten Anfangsblocks eingetragen wird. Darüberhinaus wird der Empfänger-PC den Lizenz-Block des zweiten Anfangsblocks wie erwünscht aktualisieren. Erfindungsgemäß wird derselbe jedoch vorzugsweise den gesamten ersten Anfangsblock in den Eintrag Alter Anfangsblock 70 schreiben, derart, daß jegliche Informationen des ersten Anfangsblocks bewahrt werden und insbesondere die Herkunftsinformationen des ersten Datenstroms, wie es bereits mehrfach ausgeführt worden ist.

Weder der erste Anfangsblock noch der zweite Anfangsblock noch der n-te Anfangsblock sind selbst verschlüsselt. Um jedoch die entsprechenden Anfangsblöcke vor Angriffen zu schützen, wird nach Fertigstellung z. B. des zweiten Anfangsblocks beispielsweise eine Hash-Summe über den Anfangsblock nach dem im Eintrag 68 (Fig. 3) identifizierten Hash-Algorithmus gebildet. Diese Hash-Summe wird bevorzugterweise nicht nur von den Blöcken 28, 30, 32, 72 des zweiten Anfangsblocks gebildet, sondern dieselbe umfaßt ferner auch den Block für den alten Anfangsblock 34. In den Eintrag 66 (Fig. 3) kann dann diese Hash-Summe direkt eingetragen werden. Zur Erhöhung der Sicherheit wird es jedoch bevorzugt, hier eine digitale Unterschrift für die Hash-Summe des zweiten Anfangsblocks einzutragen. Eine digitale Unterschrift der Hash-Summe über den zweiten Anfangsblock könnte beispielsweise wieder mit einem asymmetrischen Verschlüsselungsverfahren gebildet werden, derart, daß der Empfänger-PC 104, der den zweiten Datenstrom erzeugt, mit seinem privaten Schlüssel die Hash-Summe über den zweiten Anfangsblock verschlüsselt und das Ergebnis in den Eintrag 66 schreibt.

Die Heim-Hifi-Stereoanlage 106b wird nun den zweiten Datenstrom zunächst verifizieren, indem dieselbe ebenfalls eine Hash-Summe über den zweiten Anfangsblock, wie er der Heim-Hifi-Anlage zugeführt wird, bildet. Ferner wird die Heim-Hifi-Anlage 106b den Eintrag 66 in dem zweiten Anfangsblock mit dem öffentlichen Schlüssel des Empfänger-PCs 104 entschlüsseln und das erhaltene Ergebnis mit der gerade berechneten Hash-Summe vergleichen. Sind beide Hash-Summen gleich, so kann davon ausgegangen werden, daß der zweite Datenstrom nicht manipuliert worden ist. Unterscheiden sich jedoch die beiden Ergebnisse, so wird ein legal-implementiertes Auto-Hifi-Gerät das Abspielen nicht fortsetzen, da davon ausgegangen werden kann, daß unerlaubte Manipulationen entweder am zweiten Anfangsblock oder aber auch gewissermaßen "nachträglich" am ersten Anfangsblock durchgeführt worden sind.

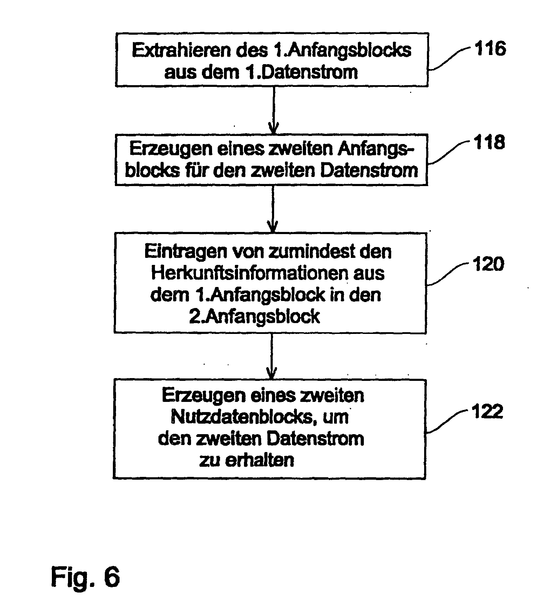

Fig. 6 zeigt ein Flußdiagramm für das erfindungsgemäße Verfahren zum Erzeugen eines zweiten Datenstroms aus einem ersten Datenstrom, das von dem Empfänger-PC 104 ausgeführt wird, um den gerätespezifisch lizenzierten ersten Datenstrom auf andere Geräte (106a bis 106c) "umzutaggen".

Grundsätzlich wird der Empfänger-PC 104 zunächst den ersten Anfangsblock aus dem ersten Datenstrom extrahieren (116). Darüberhinaus wird der Empfänger-PC 104 soweit möglich einen zweiten Anfangsblock für den zweiten Datenstrom erzeugen (118). Dieser soweit möglich erzeugte Anfangsblock könnte alle Informationen des in Fig. 3 gezeigten Anfangsblocks (Blöcke 28, 30, 32, 34, 72) umfassen, jedoch noch nicht den Alter-Anfangsblock-Block 34. Dieser wird in einem Schritt 120 beschrieben, wobei zumindest die Herkunftsinformationen aus dem ersten Anfangsblock in den Eintrag 70 eingetragen werden. Aus Sicherheitsgründen und auch aus Implementationsgründen wird es jedoch bevorzugt, nicht nur die Herkunftsinformationen aus dem ersten Anfangsblock sondern die gesamten Informationen aus dem ersten Anfangsblock in den Eintrag 70 des zweiten Anfangsblocks einzutragen. Dies könnte dazu führen, daß bestimmte Informationen nun doppelt vorhanden sind, wie z. B. die Urheberinformationen 74 sowie Informationen aus den anderen Blöcken, wie z. B. Erster Schritt 26, Schritt 24, Menge 22 usw. Bereits hier wird jedoch ersichtlich, daß durch die Tatsache, daß der Empfänger-PC 104 einen kompletten zweiten Anfangsblock im Schritt 118 erzeugt, derselbe auch nicht an die Parameter des Lieferanten 102 von Multimediadaten gebunden ist. Es könnte beispielsweise ein weniger aufwendiges Verschlüsselungsverfahren eingesetzt werden, um es zu ermöglichen, daß der zweite Datenstrom mit weniger Aufwand wieder durch beispielsweise den Solid-State-Player 106c entschlüsselt werden kann, der bekanntlich begrenzte Speicher- und Prozessorressourcen haben muß, um preisgünstig angeboten werden zu können. Der Nutzdatenblock des zweiten Datenstroms könnten unter diesen Gesichtspunkten sogar überhaupt nicht mehr verschlüsselt sein, wenn es bevorzugt wird.

Der Empfänger-PC 104 erzeugt schließlich einen zweiten Nutzdatenblock für den zweiten Datenstrom (122), um schließlich den zweiten Datenstrom zu erhalten.

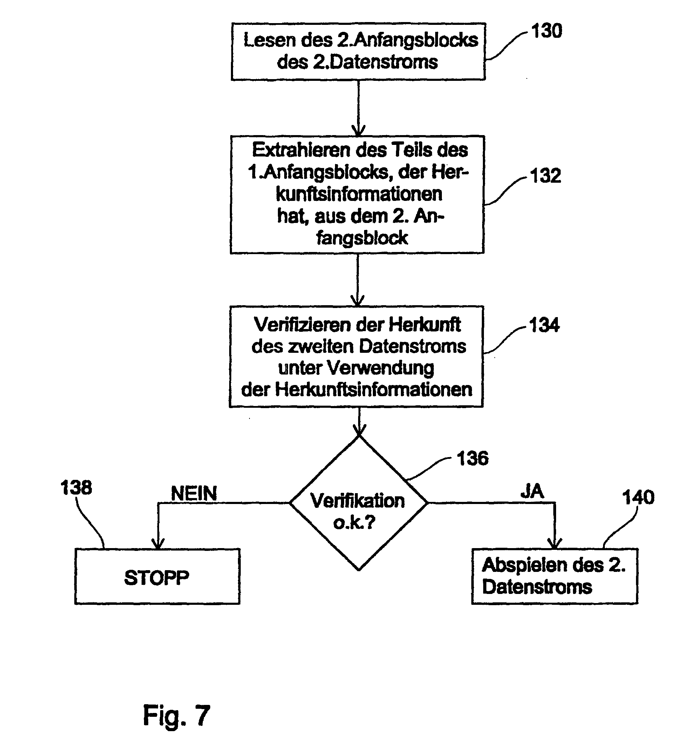

Das Flußdiagramm in Fig. 7 beschreibt allgemein ein verfahren zum Abspielen eines zweiten Datenstroms, der aufgrund eines ersten Datenstroms erzeugt worden ist, wobei dieses Verfahren in einem der Geräte 106a bis 106c ausgeführt werden könnte. Sollte zwischen dem Lieferanten 102 von Multimediadaten und dem Empfänger-PC 104 ein weiterer Zwischenverteiler, wie z. B. ein "Einzelhändler" von Multimediadaten, der von dem Lieferanten 102 von Multimediadaten, der dann eine Großhändlerfunktion hat, bedient wird, angeordnet sein, so würde das in Fig. 7 allgemein dargestellte erfindungsgemäße Verfahren bereits von dem Empfänger-PC 104 ausgeführt werden.

Das Verfahren zum Abspielen kann allgemein mit dem Schritt des Lesens des zweiten Anfangsblocks des zweiten Datenstroms (130) begonnen werden. Hierauf wird das Gerät 106a beispielsweise den Teil des ersten Anfangsblocks, der Herkunftsinformationen umfaßt, d. h. den Alter-Anfangsblock-Block 34 extrahieren und die Nutzdaten des Eintrags 70 lesen (132).

Um das Abspielen illegaler Stücke zu unterbinden, wird in einem Schritt 134 die Herkunft des zweiten Datenstroms unter Verwendung der Herkunftsinformationen im Eintrag 70 verifiziert. Eine solche Verifikation könnte beispielsweise darin bestehen, daß geprüft wird, ob überhaupt Herkunftsinformationen in dem zweiten Anfangsblock vorhanden sind (136). Wird bei der Verifikation 136 festgestellt, daß überhaupt keine Herkunftsinformationen in dem zweiten Anfangsblock vorhanden sind, so wird eine legal betriebene Abspielvorrichtung gemäß der vorliegenden Erfindung das Abspielen verweigern und den Betrieb anhalten (138). Wird bei dieser einfachen Form der Verifikation 136 festgestellt, daß Herkunftsinformationen vorhanden sind, und daß dieselben auch sinnvoll sind und keine "Täuschungsdaten" irgendwelcher Art sind, so wird die erfindungsgemäße Abspielvorrichtung das Abspielen des zweiten Datenstroms beginnen bzw. fortsetzen (140).

Eine aufwendigere Art und Weise der Verifikationen könnte darin bestehen, zu prüfen, ob die Lieferantenkennung 42 des zweiten Anfangsblocks mit der Benutzerkennung 44 des ersten Anfangsblocks übereinstimmt. In diesem Fall wäre zweifelsfrei nachgewiesen, daß die in dem Abspielgerät vorliegende Kopie auch von dem entsprechenden Heim-PC stammt. Beliebige weitere Verifikationstechniken mit mehr oder weniger Aufwand sind denkbar.

Bei einem bevorzugten Ausführungsbeispiel der vorliegenden Erfindung wird es bevorzugt, die Verifikation über eine digitale Unterschrift, die sowohl Daten des zweiten Anfangsblocks als auch Daten des ersten Anfangsblocks umfaßt, durchzuführen, wie sie in Verbindung mit Fig. 4 beschrieben worden ist. Weitere noch kompliziertere Verfahren können ebenfalls zur Verifikation eingesetzt werden, bei denen jedoch immer die Herkunft des vorliegenden Datenstroms überprüft wird, die entweder Urheberinformationen sein können, oder aber auch entsprechende Lieferanteneinträge 42 oder Benutzereinträge 44 der einzelnen eingebetteten Anfangsblöcke der allgemein gesprochen mehrfach rekursiven Anfangsblockstruktur, die in Fig. 5 veranschaulicht ist.

Neben der Verifikation der Herkunft des zweiten Datenstroms (Schritt 134 in Fig. 7) wird das Abspielgerät vorzugsweise derart implementiert sein, daß es auch den Lizenz-Block 30 verarbeitet und insbesondere beispielsweise anhand der Einträge 58 und 60 bezüglich der erlaubten bzw. tatsächlichen Abspielanzahl verarbeitet, um zu eruieren, ob es einen Datenstrom überhaupt noch abspielen darf. Selbstverständlich wird das Abspielgerät, wenn der zweite Datenstrom verschlüsselt ist, auf die beschriebene Art und Weise die anderen Informationen des zweiten Anfangsblocks verwenden, um letztendlich den zweiten Datenstrom zu entschlüsseln, zu decodieren und abzuspielen.

## Patentansprüche

1. Verfahren zum Erzeugen eines zweiten Datenstroms aus einem ersten Datenstrom, der einen ersten Anfangsblock (12) und einen ersten Nutzdatenblock (14) mit Nutzdaten aufweist, wobei der erste Anfangsblock eine erste Lieferantenkennung (42) für einen Lieferanten (102) des ersten Datenstroms und eine erste Benutzerkennung (44) für einen Empfänger (104) des ersten Datenstroms aufweist, mit folgenden Schritten:
Extrahieren (116) des ersten Anfangsblocks (12) aus dem ersten Datenstrom;
Erzeugen (118) eines zweiten Anfangsblocks für den zweiten Datenstrom, wobei der zweite Anfangsblock eine zweite Lieferantenkennung für einen Lieferanten (104) des zweiten Datenstroms und eine zweite Benutzerkennung für einen Empfänger (106a, 106b, 106c) des zweiten Datenstroms aufweist;
Eintragen (120) zumindest eines Teils (42, 44, 74) des ersten Anfangsblocks in den zweiten Anfangsblock, wobei der Teil des ersten Anfangsblocks Informationen, die Rückschlüsse auf die Herkunft der Nutzdaten gestatten, wobei die Informationen eine erste Lieferantenkennung (42) für einen Lieferanten (102) des ersten Datenstroms aufweisen, und die erste Benutzerkennung (44) für einen Empfänger (104) des ersten Datenstroms umfaßt; und
Erzeugen (122) eines zweiten Nutzdatenblocks, der dieselben Nutzdaten aufweist wie der Nutzdatenblock der ersten Datenstroms, um den zweiten Datenstrom zu erhalten.

2. Verfahren nach Anspruch 1, bei dem die Informationen, die Rückschlüsse auf die Herkunft des ersten Datenstroms gestatten, ferner Urheberinformationen (74) umfassen, wie z. B. den Autor, den Komponisten, die ISRC-Nummer, die ISAN-Nummer oder die ISMN-Nummer der Nutzdaten des ersten Datenstroms.

3. Verfahren nach Anspruch 1, bei dem die erste Benutzerkennung (44) gerätespezifisch ist und der Empfänger (104) des ersten Datenstroms ein durch die Benutzerkennung (44) bezeichnetes Abspielgerät oder eine Smart Card ist.

4. Verfahren nach einem der vorhergehenden Ansprüche, bei dem der Teil des ersten Anfangsblocks, der in den zweiten Anfangsblock eingetragen wird, ferner Lizenzdaten (30) umfaßt, die sich auf die Art und Weise beziehen, auf die ein Empfänger (104) des ersten Datenstroms denselben benutzen darf, wobei die Lizenzdaten des ersten Anfangsblocks die Lizenzdaten des zweiten Anfangsblocks spezifizieren.

5. Verfahren nach Anspruch 4, bei dem die Lizenzdaten (30) des ersten Anfangsblocks spezifizieren, daß der erste Datenstrom eine bestimmte Anzahl von Malen kopiert werden darf (62), daß jedoch keine Kopie einer Kopie gemacht werden darf, wobei der Schritt des Erzeugens (118) des zweiten Anfangsblocks für den zweiten Datenstrom das Eintragen von zweiten Lizenzinformationen in den zweiten Anfangsblock des zweiten Datenstroms umfaßt, derart, daß keine Kopie des zweiten Datenstroms mehr gemacht werden darf.

6. Verfahren nach einem der vorhergehenden Ansprüche, das ferner folgenden Schritt aufweist:
Erstellen einer digitalen Unterschrift (66) für den zweiten Anfangsblock einschließlich des Teils des ersten Anfangsblocks und Anhängen der digitalen Unterschrift an den zweiten Anfangsblock.

7. Verfahren nach Anspruch 6, bei dem der Schritt des Erstellens ferner folgende Teilschritte aufweist:
Bilden einer Hash-Summe über den zweiten Anfangsblock einschließlich des Teils (34) des ersten Anfangsblocks unter Verwendung eines spezifizierten Hash-Algorithmus (68); und
Verschlüsseln der Hash-Summe mittels eines asymmetrischen Verschlüsselungsverfahrens unter Verwendung eines privaten Schlüssels des Empfängers (104) des ersten Datenstroms.

8. Verfahren nach einem der vorhergehenden Ansprüche, bei dem die Nutzdaten in dem Nutzdatenblock (14) zumindest teilweise verschlüsselt sind und Verschlüsselungsinformationen in dem ersten Anfangsblock enthalten sind, wobei der Schritt des Erzeugens (118) des zweiten Anfangsblocks ferner folgende Schritte aufweist:
Entschlüsseln des ersten Nutzdatenblocks des ersten Datenstroms unter Verwendung der Verschlüsselungsinformationen (46, 40, 22 bis 26) in dem ersten Anfangsblock;
Verschlüsseln der entschlüsselten Nutzdaten und Eintragen von entsprechenden Verschlüsselungsinformationen (46, 40, 22 - 26) in den zweiten Anfangsblock,
wobei die Verschlüsselungsinformationen des ersten Anfangsblocks ebenfalls in den zweiten Anfangsblock eingetragen werden.

9. Verfahren nach Anspruch 8, bei dem die verschlüsselten Nutzdaten in dem ersten Nutzdatenblock (14) symmetrisch verschlüsselt sind und der Schlüssel wiederum unter Verwendung eines privaten Schlüssels asymmetrisch verschlüsselt ist, wobei der Schritt des Entschlüsselns folgende Schritte aufweist:
Entschlüsseln des verschlüsselten Schlüssels (46) mittels des öffentlichen Schlüssels des Lieferanten (102), um den Schlüssel für eine symmetrische Entschlüsselung (40) zu erhalten;
Verschlüsseln eines Nutzdaten-Schlüssels der entschlüsselten Nutzdaten unter Verwendung eines privaten Schlüssels eines Empfängers (104) des ersten Datenstroms, der das Verfahren zum Erzeugen eines zweiten Datenstroms ausführt; und
Eintragen des asymmetrisch verschlüsselten Nutzdaten-Schlüssels in den zweiten Anfangsblock (46).

10. Verfahren nach einem der vorhergehenden Ansprüche, bei dem im Schritt des Eintragens (120) der gesamte erste Anfangsblock in den zweiten Anfangsblock eingetragen wird.

11. verfahren nach einem der vorhergehenden Ansprüche, bei dem der erste Anfangsblock selbst zumindest einen Teil eines Anfangsblocks eines Datenstroms aufweist, der sich auf die Herkunft des ersten Datenstroms bezieht, derart, daß sich durch den Schritt des Eintragens eine mehrfach rekursive Anfangsblockstruktur ergibt.

12. Verfahren zum Abspielen eines zweiten Datenstroms, der einen zweiten Anfangsblock und einen zweiten Nutzdatenblock aufweist und aufgrund eines ersten Datenstroms, der einen ersten Anfangsblock und einen ersten Nutzdatenblock aufweist, erzeugt worden ist, wobei zumindest ein Teil (70) des ersten Anfangsblocks, der Informationen bezüglich der Herkunft des ersten Datenstroms, wobei die Informationen eine erste Lieferantenkennung (42) für einen Lieferanten (102) des ersten Datenstroms aufweisen, und die erste Benutzerkennung (44) für einen Empfänger (104) des ersten Datenstroms aufweist, in dem zweiten Anfangsblock enthalten ist, wobei der zweite Anfangsblock eine zweite Lieferantenkennung für einen Lieferanten (104) des zweiten Datenstroms und eine zweite Benutzerkennung für einen Empfänger (106a, 106b, 106c) des zweiten Datenstroms aufweist, mit folgenden Schritten:
Extrahieren (132) des Teils (70) des ersten Anfangsblocks aus dem zweiten Anfangsblock;
Verifizieren (134) der Herkunft des zweiten Datenstroms unter Verwendung des Teils (70) des ersten Anfangsblocks, der Informationen bezüglich der Herkunft des ersten Datenstroms aufweist, wobei ein positives Ergebnis erhalten wird, wenn die zweite Lieferantenkennung mit der ersten Benutzerkennung übereinstimmt, und wobei ein negatives Ergebnis erhalten wird, wenn die zweite Lieferantenkennung mit der ersten Benutzerkennung nicht übereinstimmt;
bei einem positiven Ergebnis des Schritts des Verifizierens (136), Abspielen (140) des zweiten Datenstroms; und
bei einem negativen Ergebnis des Schritts des verifizierens, Verweigern (138) des Abspielens des zweiten Datenstroms.

13. Verfahren nach Anspruch 12, bei dem an den zweiten Anfangsblock des zweiten Datenstroms eine digitale Unterschrift (66) angehängt ist, die auf den Teil (70) des ersten Anfangsblocks paßt, und bei dem der Schritt des Verifizierens folgenden Teilschritt aufweist:
Überprüfen der Authentizität des zweiten Anfangsblocks unter Verwendung der digitalen Unterschrift (66).

14. Verfahren nach Anspruch 13, bei dem die digitale Unterschrift (66) das Ergebnis einer mittels eines privaten Schlüssels der Vorrichtung (104), die den zweiten Datenstrom erzeugt hat, durchgeführten Verschlüsselung einer Hash-Summe des zweiten Anfangsblocks ist, und bei dem der Schritt des Überprüfens der Authentizität folgende Schritte aufweist:
Entschlüsseln der digitalen Unterschrift durch einen öffentlichen Schlüssel der Vorrichtung (104), die den zweiten Datenstrom erzeugt hat, um die Hash-Summe des zweiten Anfangsblocks zu erhalten;
Bilden einer Hash-Summe des vorliegenden Anfangsblocks;
Vergleichen der Hash-Summen;
bei Übereinstimmung der Hash-Summen, Ausgeben eines positiven Verifikationsergebnisses (136).

15. Verfahren nach Anspruch 14, bei dem der Teil (70) des ersten Anfangsblocks ferner Lizenzinformationen (30) bezüglich der Art und Weise, wie der erste Datenstrom verwendet werden darf, aufweist, und bei dem der zweite Anfangsblock Lizenzdaten (30) aufweist, die aus den Lizenzdaten des ersten Anfangsblocks abgeleitet sind, das ferner folgende Teilschritte aufweist:
Vergleichen der Lizenzdaten des zweiten Anfangsblocks und des ersten Anfangsblocks, um die Authentizität der Lizenzdaten des zweiten Anfangsblocks zu bewerten;
bei fraglicher Authentizität, Sperren (138) des Abspielens des zweiten Datenstroms.

16. Vorrichtung (104) zum Erzeugen eines zweiten Datenstroms aus einem ersten Datenstrom, der einen ersten Anfangsblock (12) und einen ersten Nutzdatenblock (14) mit Nutzdaten aufweist, wobei der erste Anfangsblock eine erste Lieferantenkennung (42) für einen Lieferanten (102) des ersten Datenstroms und eine erste Benutzerkennung (44) für einen Empfänger (104) des ersten Datenstroms aufweist, mit folgenden Merkmalen:
einer Einrichtung zum Extrahieren (116) des ersten Anfangsblocks (12) aus dem ersten Datenstrom;
einer Einrichtung zum Erzeugen (118) eines zweiten Anfangsblocks für den zweiten Datenstrom, wobei der zweite Anfangsblock eine zweite Lieferantenkennung für einen Lieferanten (104) des zweiten Datenstroms und eine zweite Benutzerkennung für einen Empfänger (106a, 106b, 106c) des zweiten Datenstroms aufweist;
einer Einrichtung zum Eintragen (120) zumindest eines Teils (42, 44, 74) des ersten Anfangsblocks in den zweiten Anfangsblock, wobei der Teil des ersten Anfangsblocks Informationen, die Rückschlüsse auf die Herkunft der Nutzdaten gestatten, wobei die Informationen eine erste Lieferantenkennung (42) für einen Lieferanten (102) des ersten Datenstroms aufweisen, und die erste Benutzerkennung (44) für einen Empfänger (104) des ersten Datenstroms umfaßt; und
einer Einrichtung zum Erzeugen (122) eines zweiten Nutzdatenblocks, der dieselben Nutzdaten aufweist wie der Nutzdatenblock der ersten Datenstroms, um den zweiten Datenstrom zu erhalten.

17. Vorrichtung (104) nach Anspruch 16, die als PersonalComputer ausgeführt ist.

18. Vorrichtung (106a bis 106c) zum Abspielen eines zweiten Datenstroms, der einen zweiten Anfangsblock und einen zweiten Nutzdatenblock aufweist und aufgrund eines ersten Datenstroms, der einen ersten Anfangsblock und einen ersten Nutzdatenblock aufweist, erzeugt worden ist,
wobei zumindest ein Teil (70) des ersten Anfangsblocks, der Informationen bezüglich der Herkunft des ersten Datenstroms aufweist, wobei die Informationen eine erste Lieferantenkennung (42) für einen Lieferanten (102) des ersten Datenstroms aufweisen, und die erste Benutzerkennung (44) für einen Empfänger (104) des ersten Datenstroms in dem zweiten Anfangsblock enthalten ist,
wobei der zweite Anfangsblock eine zweite Lieferantenkennung für einen Lieferanten (104) des zweiten Datenstroms und eine zweite Benutzerkennung für einen Empfänger (106a, 106b, 106c) des zweiten Datenstroms aufweist, mit folgenden Merkmalen:
einer Einrichtung zum Extrahieren (132) des Teils (70) des ersten Anfangsblocks aus dem zweiten Anfangsblock;
einer Einrichtung zum Verifizieren (134) der Herkunft des zweiten Datenstroms unter Verwendung des Teils (70) des ersten Anfangsblocks, der Informationen bezüglich der Herkunft des ersten Datenstroms aufweist; und
einer Einrichtung zum Abspielen des zweiten Datenstroms, die auf die Einrichtung zum Verifizieren (134) anspricht, um den zweiten Datenstrom nur dann abzuspielen, wenn die Einrichtung zum Verifizieren (134) ein positives Ergebnis liefert, und um bei einem negativen Ergebnis das Abspielen des zweiten Datenstroms zu verweigern.

19. Vorrichtung nach Anspruch 18, die als Hifi-Anlage (106b), als Auto-Hifi-Anlage (106a), als tragbares Multimediaabspielgerät (106c), als Computer oder als Komponente einer der vorgenannten Geräte ausgeführt ist.

## Claims

1. Method for generating a second data stream from a first data stream which comprises a first header (12) and a first payload data block (14) with payload data, wherein the first header comprises a first supplier identification (42) for a supplier (102) of the first data stream and a first user identification (44) for a receiver (104) of the first data stream, the method comprising the following steps:
extracting (116) the first header (12) from the first data stream;
generating (118) a second header for the second data stream, wherein the second header comprises a second supplier identification for a supplier (104) of the second data stream and a second user identification for a receiver (106a, 106b, 106c) of the second data stream;
entering (120) at least a part (42, 44, 74) of the first header into the second header, the part of the first header including information which allows conclusions as to the origin of the payload data, wherein the information includes a first supplier identification (42) for a supplier (102) of the first data stream and the first user identification (44) for a receiver (104) of the first data stream; and
generating (122) a second payload data block having the same payload data as the payload data block of the first data stream, so as to obtain the second data stream.

2. Method as claimed in claim 1, wherein the information allowing conclusions as to the origin of the first data stream includes author information (74), such as the author, the component, the ISRC number, the ISAN number or the ISMN number of the payload data of the first data stream.

3. Method as claimed in claim 1, wherein the first user identification (44) is device-specific, and the receiver (104) of the first data stream is a player indicated by the user identification (44), or a smart card.

4. Method as claimed in any of the preceding claims, wherein the part of the first header which is entered into the second header further comprises licence data (30) relating to the manner in which a receiver (104) of the first data stream may use the same, the licence data of the first header specifying the licence data of the second header.

5. Method as claimed in claim 4, wherein the licence data (30) of the first header specify that the first data stream may be copied a certain number of times (62), that no copy my be taken of a copy, however, the step of generating (118) the second header for the second data stream including the entering of second licence information into the second header of the second data stream, such that no more copy may be taken of the second data stream.

6. Method as claimed in any of the preceding claims which further comprises the following step:
issuing a digital signature (66) for the second header, including the part of the first header, and attaching the digital signature to the second header.

7. Method as claimed in claim 6, wherein the issuing step further comprises the following substeps:
forming a hash sum over the second header, including the part (34) of the first header, using a specified hash algorithm (68); and
encrypting the hash sum by means of an asymmetric encrypting method using a private key of the receiver (104) of the first data stream.

8. Method as claimed in any of the preceding claims, wherein the payload data in the payload data block (14) are at least partly encrypted and wherein encrypting information is contained in the first header, the step of generating (118) the second header further comprising the following steps:
decrypting the first payload data block of the first data stream using the encrypting information (46, 40, 22 to 26) in the first header;
encrypting the decrypted payload data and entering corresponding encrypting information (46, 40, 22 to 26) into the second header,
the encrypting information of the first header also being entered into the second header.

9. Method as claimed in claim 8, wherein the encrypted payload data in the first payload data block (14) are encrypted symmetrically and wherein the key is again encrypted asymmetrically using a private key, the decrypting step comprising the following steps:
decrypting the encrypted key (46) by means of the public key of the supplier (102) so as to obtain the key for a symmetric decryption (40);
encrypting a payload data key of the decrypted payload data using a private key of a receiver (104) of the first data stream carrying out the method for generating a second data stream; and
entering the asymmetrically encrypted payload data key into the second header (46).

10. Method as claimed in any of the preceding claims, wherein in the step of entering (120), the entire first header is entered into the second header.

11. Method as claimed in any of the preceding claims, wherein the first header itself comprises at least a part of a header of a data stream which relates to the origin of the first data stream, such that the entering step results in a multiply recursive header structure (Fig. 5).

12. Method for playing a second data stream which comprises a second header and a second payload data block and has been generated due to a first data stream which comprises a first header and a first payload data block, wherein at least a part (70) of the first header which comprises information regarding the origin of the first data stream, wherein the information comprises a first supplier identification(42) for a supplier (102) of the first data stream and a first user identification (44) for a receiver (104) of the first data stream, is contained in the second header, wherein the second header comprises a second supplier identification for a supplier (104) of the second data stream and a second user identification for a receiver (106a, 106b, 106c) of the second data stream, the method comprising the following steps:
extracting (132) the part (70) of the first header from the second header;
verifying (134) the origin of the second data stream using the part (70) of the first header which comprises information regarding the origin of the first data stream, wherein a positive result is obtained if the second supplier identification matches the first user identification, and wherein a negative result is obtained if the second supplier identification does not match the first user identification;
in case of a positive result of the verifying step (136), playing (140) the second data stream; and
in case of a negative result of the verifying step, denying (138) the playing of the second data stream.

13. Method as claimed in claim 12, wherein the second header of the second data stream has a digital signature (66) attached to it which fits the part (70) of the first header, and wherein the verifying step comprises the following substep:
checking the authenticity of the second header using the digital signature (66).

14. Method as claimed in claim 13, wherein the digital signature (66) is the result of an encryption of a hash sum of the second header, which encryption has been carried out by means of a private key of the apparatus (104) having generated the second data stream, the step of checking the authenticity comprising the following steps:
decrypting the digital signature by a public key of the apparatus (104) which has generated the second data stream, so as to obtain the hash sum of the second header;
forming a hash sum of the present header; comparing the hash sums;
in case of the hash sums matching, issuing a positive verification result (136).

15. Method as claimed in claim 14, wherein the part (70) of the first header further comprises licence information (30) regarding the manner in which the first data stream may be utilized, and wherein the second header comprises licence data (30) derived from the licence data of the first header, the method further comprising the following substeps:
comparing the licence data of the second header and the first header so as to evaluate the authenticity of the licence data of the second header;
in case of questionable authenticity, blocking (138) the playing of the second data stream.

16. Apparatus (104) for generating a second data stream from a first data stream which comprises a first header (12) and a first payload data block (14) with payload data, wherein the first header comprises a first supplier identification (42) for a supplier (102) of the first data stream and a first user identification (44) for a receiver (104) of the first data stream, the apparatus comprising the following:
means for extracting (116) the first header (12) from the first data stream;
means for generating (118) a second header for the second data stream, wherein the second header
comprises a second supplier identification for a supplier (104) of the second data stream and a second user identification for a receiver (106a, 106b, 106c) of the second data stream;
means for entering (120) at least a part (42, 44, 74) of the first header into the second header, the part of the first header including information which allow conclusions as to the origin of the payload data, wherein the information includes a first supplier identification(42) for a supplier (102) of the first data stream and the first user identification (44) for a receiver (104) of the first data stream; and
means for generating (122) a second payload data block which comprises the same payload data as the payload data block of the first data stream, so as to obtain the second data stream.

17. Apparatus (104) as claimed in claim 16, which is designed as a personal computer.

18. Apparatus (106a to 106c) for playing a second data stream which comprises a second header and a second payload data block and has been generated due to a first data stream which comprises a first header and a first payload data block, at least a part (70) of the first header, which comprises information regarding the origin of the first data stream, wherein the information includes a first supplier identification (42) for a supplier (102) of the first data stream and the first user identification (44) for a receiver (104) of the first data stream, being contained in the second header, wherein the second header comprises a second supplier identification for a supplier (104) of the second data stream and a second user identification for a receiver (106a, 106b, 106c) of the second data stream, the apparatus comprising the following:
means for extracting (132) the part (70) of the first header from the second header;
means for verifying (134) the origin of the second data stream using the part (70) of the first header which comprises information regarding the origin of the first data stream; and
means for playing the second data stream, which responds to the means for verifying (134), so as to play the second data stream only if the means for verifying (134) provide a positive result, and deny the playing of the second data stream in case of a negative result.

19. Apparatus as claimed in claim 18, which is designed as a hifi system (106b), as a car hifi system (106a), as a portable multimedia player (106c), as a computer or as a component of any of the above-mentioned devices.

## Revendications

1. Procédé pour produire un deuxième flux de données à partir d'un premier flux de données présentant un premier bloc de début (12) et un premier bloc de données utiles (14) avec des données utiles, le premier bloc de début présentant une première identification de fournisseur (42) pour un fournisseur (102) du premier flux de données et une première identification d'utilisateur (44) pour un récepteur (104) du premier flux de données, aux étapes suivantes consistant à :
extraire (116) le premier bloc de début (12) du premier flux de données;
générer (118) un deuxième bloc de début pour le deuxième flux de données, le deuxième bloc de début présentant une deuxième identification de fournisseur pour un fournisseur (104) du deuxième flux de données et une deuxième identification d'utilisateur pour un récepteur (106a, 106b, 106c) du deuxième flux de données ;
entrer (120) au moins une partie (42, 44, 74) du premier bloc de début dans le deuxième bloc de début, la partie du premier bloc de début comportant des informations permettant des conclusions sur l'origine des données utiles, les informations présentant une première identification de fournisseur (42) pour un fournisseur (102) du premier flux de données et comportant la première identification d'utilisateur (44) pour un récepteur (104) du premier flux de données ; et
générer (122) un deuxième bloc de données utiles présentant les mêmes données utiles que le bloc de données utiles du premier flux de données, pour obtenir le deuxième flux de données.

2. Procédé selon la revendication 1, dans lequel les informations permettant des conclusions sur l'origine du premier flux de données comportent, par ailleurs, des informations de droits d'auteur (74), telles que par exemple l'auteur, le compositeur, le numéro ISRC, le numéro ISAN ou le numéro ISMN des données utiles du premier flux de données.

3. Procédé selon la revendication 1, dans lequel la première identification d'utilisateur (44) est spécifique à l'appareil et le destinataire (104) du premier flux de données est un appareil de reproduction ou une carte intelligente désigné(e) par l'identification d'utilisateur (44).

4. Procédé selon l'une des revendications précédentes, dans lequel la partie du premier bloc de début qui est entrée dans le deuxième bloc de début comporte, par ailleurs, des données de licence (30) qui se rapportent à la manière dont un récepteur (104) du premier flux de données peut utiliser celui-ci, les données de licence du premier bloc de début spécifiant les données de licence du deuxième bloc de début.

5. Procédé selon la revendication 4, dans lequel les données de licence (30) du premier bloc de début spécifient que le premier flux de données peut être copié un nombre déterminé de fois (62), qu'il ne peut toutefois pas être fait de copie d'une copie, l'étape de génération (118) du deuxième bloc de début pour le deuxième flux de données comprenant l'entrée de deuxièmes informations de licence dans le deuxième bloc de début du deuxième flux de données, de sorte qu'il ne peut pas être fait de copie du deuxième flux de données.

6. Procédé selon l'une des revendications précédentes, présentant, par ailleurs, l'étape suivante consistant à :
créer une signature numérique (66) pour le deuxième bloc de début, y compris la partie du premier bloc de début, et ajouter la signature numérique au deuxième bloc de début.

7. Procédé selon la revendication 6, dans lequel l'étape de création présente, par ailleurs, les étapes partielles suivantes consistant à :
former une somme d'informations parasites par l'intermédiaire du deuxième bloc de début, y compris la partie (34) du premier bloc de début, à l'aide d'un algorithme d'informations parasites (68) spécifié ; et
crypter la somme d'informations parasites au moyen d'un procédé de cryptage asymétrique à l'aide d'une clef privée du récepteur (104) du premier flux de données.

8. Procédé selon l'une des revendications précédentes, dans lequel les données utiles dans le bloc de données utiles (14) sont au moins partiellement cryptées et les informations de cryptage sont contenues dans le premier bloc de début, l'étape de génération (118) du deuxième bloc de début présentant, par ailleurs, les étapes suivantes consistant à :
décrypter le premier bloc de données utiles du premier flux de données à l'aide des informations de cryptage (46, 40, 22 à 26) dans le premier bloc de début ;
crypter les données utiles décryptées et entrer les informations de cryptage (46, 40, 22 à 26) correspondantes dans le deuxième bloc de début,
les informations de cryptage du premier bloc de début étant également entrées dans le deuxième bloc de début.

9. Procédé selon la revendication 8, dans lequel les données utiles cryptées sont cryptées symétriquement dans le premier bloc de données utiles (14) et la clef est, quant à elle, cryptée asymétriquement à l'aide d'une clef privée, l'étape de décryptage présentant les étapes suivantes consistant à :
décrypter la clef cryptée (46) au moyen de la clef publique du fournisseur (102), pour obtenir la clef pour un décryptage symétrique (40);
crypter une clef de données utiles des données utiles décryptées à l'aide d'une clef privée d'un récepteur (104) du premier flux de données qui met en oeuvre le procédé pour générer un deuxième flux de données; et
entrer la clef de données utiles cryptée asymétriquement dans le deuxième bloc de début (46).

10. Procédé selon l'une des revendications précédentes, dans lequel, à l'étape d'entrée (120), le premier bloc de début complet est entré dans le deuxième bloc de début.

11. Procédé selon l'une des revendications précédentes, dans lequel le premier bloc lui-même présente au moins une partie d'un premier bloc de début d'un flux de données qui se réfère à l'origine du premier flux de données, de sorte qu'il résulte de l'étape d'entrée une structure de bloc de début récursive à plusieurs reprises.

12. Procédé pour la reproduction d'un deuxième flux de données présentant un deuxième bloc de début et un deuxième bloc de données utiles et qui a été généré sur base d'un premier flux de données présentant un premier bloc de début et un premier bloc de données, au moins une partie (70) du premier bloc de début présentant des informations relatives à l'origine du premier flux de données, les informations présentant une première identification de fournisseur (42) pour un fournisseur (102) du premier flux de données, et la première identification d'utilisateur (44) pour un récepteur (104) du premier flux de données étant contenue dans le second bloc de début, le deuxième bloc de début présentant une deuxième identification de fournisseur pour un fournisseur (104) du deuxième flux de données et une deuxième identification d'utilisateur pour un récepteur (106a, 106b, 106c) du second flux de données, aux étapes suivantes consistant à :
extraire (132) la partie (70) du premier bloc de début du deuxième bloc de début ;
vérifier (134) l'origine du deuxième flux de données à l'aide de la partie (70) du premier bloc de début présentant des informations relatives à l'origine du premier flux de données, un résultat positif étant obtenu lorsque la deuxième identification de fournisseur coïncide avec la première identification d'utilisateur, et un résultat négatif étant obtenu lorsque la deuxième identification de fournisseur ne coïncide pas avec la première identification d'utilisateur;
en cas de résultat positif de l'étape de vérification (136), reproduire (140) le deuxième flux de données ; et
en cas de résultat négatif de l'étape de vérification, refuser (138) la reproduction du deuxième flux de données.

13. Procédé selon la revendication 12, dans lequel est ajoutée au deuxième bloc de début du deuxième flux de données une signature numérique (66) qui s'adapte à la partie (70) du premier bloc de début, et dans lequel l'étape de vérification présente l'étape partielle suivante consistant à :
contrôler l'authenticité du deuxième bloc de début à l'aide de la signature numérique (66).

14. Procédé selon la revendication 13, dans lequel la signature numérique (66) est le résultat d'un cryptage d'une somme d'informations parasites du deuxième bloc de début réalisé au moyen d'une clef privée du dispositif (104) ayant généré le deuxième flux de données, et dans lequel l'étape de contrôle de l'authenticité présente les étapes suivantes consistant à :
décrypter la signature numérique par une clef publique du dispositif (104) ayant généré le deuxième flux de données, pour obtenir la somme d'informations parasites du deuxième bloc de début ;
former une somme d'informations parasites du présent bloc de début ;
comparer les sommes d'informations parasites ;
en cas de coïncidence des sommes d'informations parasites, sortir un résultat de vérification positif (136).

15. Procédé selon la revendication 14, dans lequel la partie (70) du premier bloc de début présente, par ailleurs, des informations de licence (30) relatives à la manière dont peut être utilisé le premier flux de données, et dans lequel le second bloc de début présente des données de licence (30) qui sont dérivées des données de licence du premier bloc de début, présentant, par ailleurs, les étapes partielles suivantes consistant à:
comparer les données de licence du deuxième bloc de début et du premier bloc de début, pour évaluer l'authenticité des données de licence du deuxième bloc de début ;
en cas d'authenticité douteuse, bloquer (138) la reproduction du deuxième flux de données.

16. Dispositif (104) pour générer un deuxième flux de données à partir d'un premier flux de données présentant un premier bloc de début (12) et un premier bloc de données utiles (14) à données utiles, le premier bloc de début présentant une première identification de fournisseur (42) pour un fournisseur (102) du premier flux de données et une première identification d'utilisateur (44) pour un récepteur (104) du premier flux de données, aux caractéristiques suivantes :
un dispositif destiné à extraire (116) le premier bloc de début (12) du premier flux de données ;
un dispositif destiné à générer (118) un deuxième bloc de début pour le deuxième flux de données, le deuxième bloc de début présentant une deuxième identification de fournisseur pour un fournisseur (104) du deuxième flux de données et une deuxième identification d'utilisateur pour un récepteur (106a, 106b, 106c) du deuxième flux de données ;
un dispositif destiné à entrer (120) au moins une partie (42, 44, 74) du premier bloc de début dans le deuxième bloc de début, la partie du premier bloc de début comportant des informations permettant des conclusions sur l'origine des données utiles, les informations présentant une première identification de fournisseur (42) pour un fournisseur (102) du premier flux de données, et la première identification d'utilisateur (44) pour un récepteur (104) du premier flux de données ; et
un dispositif destiné à générer (122) un deuxième bloc de données utiles présentant les mêmes données utiles que le bloc de données utiles du premier flux de données, pour obtenir le deuxième flux de données.

17. Dispositif (104) selon la revendication 16 qui est réalisé sous forme d'ordinateur personnel.

18. Dispositif (106a à 106c) pour reproduire un second flux de données présentant un deuxième bloc de début et un deuxième bloc de données utiles et ayant été généré sur base d'un premier flux de données présentant un premier bloc de début et un premier bloc de données utiles, au moins une partie (70) du premier bloc de début présentant des informations relatives à l'origine du premier flux de données, les informations présentant une première identification de fournisseur (42) pour un fournisseur (102) du premier flux de données, et la première identification d'utilisateur (44) pour un récepteur (104) du premier flux de données étant contenue dans le deuxième bloc de début, le deuxième bloc de début présentant une deuxième identification de fournisseur pour un fournisseur (104) du deuxième flux de données et une deuxième identification d'utilisateur pour un récepteur (106a, 106b, 106c) du deuxième flux de données, aux caractéristiques suivantes :
un dispositif destiné à extraire (132) la partie (70) du premier bloc de début du deuxième bloc de début ;
un dispositif destiné à vérifier (134) l'origine du deuxième flux de données à l'aide de la partie (70) du premier bloc de début présentant les informations relatives à l'origine du premier flux de données ; et
un dispositif destiné à reproduire le deuxième flux de données qui réagit au dispositif destiné à vérifier (134), pour ne reproduire le deuxième flux de données que lorsque le dispositif destiné à vérifier (134) fournit un résultat positif et pour refuser, en cas de résultat négatif, la reproduction du deuxième flux de données.

19. Dispositif selon la revendication 18 qui est réalisé sous forme d'installation Hifi (106b), d'installation Hifi pour voiture (106a), de reproducteur multimédia portatif (106c), d'ordinateur ou d'un élément de l'un des appareils précités.
